# EUROPÄISCHE PATENTSCHRIFT

(11) **EP 2 954 789 B1**
(45) Veröffentlichungstag und Bekanntmachung des Hinweises auf die Patenterteilung: **19.04.2017**
(21) Anmeldenummer: 15170761.9
(22) Anmeldetag: 05.06.2015
(51) Int. Cl.: A23L 33/17, A21D 2/26, A23L 11/00, A23L 33/00

(54) **FASERPRÄPARAT AUS LUPINENSAMEN**
FIBRE COMPOSITION MADE FROM LUPIN SEEDS
PRÉPARATION DE FIBRES À BASE DE GRAINES DE LUPINS

(30) Priorität: 06.06.2014 DE 102014008382; 10.04.2015 DE 102015206426
(43) Veröffentlichungstag der Anmeldung: 16.12.2015
(73) Patentinhaber: Prolupin GmbH, 18507 Grimmen (DE)
(72) Erfinder: Eisner, Peter, 85354 Freising (DE); Mittermaier, Stephanie, 85368 Moosburg (DE); Hasenkopf, Katrin, 85354 Freising (DE); Weisz, Ute, 85354 Freising (DE); Schott, Michael, 85416 Langenbach (DE)
(74) Vertreter: Witte, Weller & Partner Patentanwälte mbB

(56) Entgegenhaltungen:
- WO-A1-2006/133492
- WO-A1-2010/097237
- WO-A2-2006/076889
- US-A1- 2008 206 439

## Beschreibung

### Anwendungsgebiet

Die Erfindung betrifft ein Faserpräparat aus den Kotyledonen von Lupinensamen, vorzugsweise aus Lupinus angustifolius, ein Verfahren zur Herstellung und die Anwendung eines derartigen Faserpräparates in Lebensmitteln.

### Stand der Technik

Faserhaltige Präparate aus Lupinensamen sind beispielsweise aus der WO 2006/133492 A1 bekannt. Hier wird ein Faserpräparat aus den Schalen der Samen beschrieben. Über die Öl- und Fettbindeeigenschaften finden sich keine Hinweise. In der US 2008/0206439 A1 wird ein Verfahren zur Herstellung von Lupinenextrakten beschrieben. Die daraus erhaltene Lupinenfaser-Fraktion wird getrocknet und anschießend fein vermahlen. Das Pulver weist reduzierte wasserbindende Eigenschaften auf und eignet sich damit besonders für Backwaren. Auch in der US 2007/154611 A1 und der DE 19912037 A1 werden Verfahren beschrieben, um Proteine aus Lupinensamen zu extrahieren. Genaue Angaben zur weiteren Behandlung und zu den Eigenschaften der Kotyledonenfasern, die meist als Rückstand verbleiben, finden sich in diesen Druckschriften jedoch nicht.

Die WO 2010/097237 beschreibt ein Verfahren zur Gewinnung von Porteinpräparaten aus Lupinensamen. Die WO 2006/076889 beschreibt ein Verfahren zur Herstellung einer pflanzlichen Proteinzutat für ein Speiseeis.

In der Literatur finden sich Ausführungen zur Charakterisierung von Lupinenfasern. So wird in Cornfine et al., "Influence of chemical and physical modification on the bile acid binding capacity of dietary fibre from lupins", Food Chemistry 122 (2010), Seiten 638-644 , die Gewinnung von Lupinenfasern aus den Kotyledonen von Süßlupinen beschrieben, wobei Lupinensamen geschält und die Kerne (Kotyledonen) flockiert und entölt werden. Anschließend wird die Faserfraktion in einem wässrigen Prozess von den Proteinen abgetrennt und mittels Gefriertrocknung getrocknet. Die dabei erhaltenen Faserpräparate weisen nach Aussage der Autoren eine sehr gute Gallensäurebindung zur Senkung des Cholesterinspiegels auf.

Gefriergetrocknete Faserpräparate aus Lupinen-kotyledonen weisen meist ein gutes Öl- und Fettbindevermögen auf. Die Bindung von Ölen und Fetten ist in vielen Applikationen erwünscht, um im Verlauf der Lagerung das Austreten von Fett oder Öl aus der Lebensmittelmatrix zu unterdrücken und das Öl fest in der Matrix zu binden. Hierfür weisen Lupinenfasern aus den Kotyledonen nach einer Gefrier- oder Vakuumtrocknung ideale Eigenschaften auf. Durch einen hohen Anteil von Waben-förmigen Hohlräumen in der Faserstruktur sind diese Faserpräparate in der Lage, unpolare Substanzen wie Öl und Fett mithilfe von ausgeprägten Adhäsions- und Kapillarkräften in Form feiner Tröpfchen oder Partikel fest zu binden und damit stabil in die Lebensmittelmatrix einzulagern.

Als Konsequenz der guten Ölbindung ergeben sich aber bei einigen Anwendungen auch Nachteile. So kann bei Einsatz von nativen Lupinenfasern in Lebensmitteln mit reduziertem Fettgehalt der Genusswert erheblich reduziert werden. Durch die gute Ölbindung lagern sich zugesetzte Öle und Fette in den Lebensmitteln zu einem sehr großen Anteil in den Faserhohlräumen ein und stehen damit für das weiche Gefühl des Fettes auf der Zunge nicht mehr zur Verfügung. In Folge dessen kann vor allem bei fettreduzierten Lebensmitteln durch Zusatz von Lupinen-Kotyledonenfasern nach Stand der Technik ein raues und trockeneres Mundgefühl entstehen.

Somit ist trotz der beschriebenen ernährungsphysiologischen Vorteile von nativen Lupinenfasern deren Einsatz in einigen Anwendungen nicht vorteilhaft.

Die Aufgabe der vorliegenden Erfindung besteht darin, ein Faserpräparat aus Lupinensamen bereitzustellen, das reduzierte Fettbindeeigenschaften aufweist, sowie ein Verfahren zur Herstellung eines derartigen Faserpräparats anzugeben.

### Darstellung der Erfindung

Die Aufgabe wird mit dem Faserpräparat und dem Verfahren gemäß den Patentansprüchen 1 und 10 gelöst. Vorteilhafte Ausgestaltungen des Faserpräparats und des Verfahrens sind Gegenstand der abhängigen Patentansprüche oder lassen sich der nachfolgenden Beschreibung sowie dem Ausführungsbeispiel entnehmen.

Das vorgeschlagene Faserpräparat enthält als Hauptbestandteil Faserpartikel aus Kotyledonen der Lupinensamen. Derartige Faserpartikel weisen im Ausgangsmaterial, d.h. im nativen Zustand vor einer Verarbeitung zum vorliegenden Faserpräparat, eine zellenartige Struktur mit durch Zellwände voneinander abgegrenzten Hohlräumen und eine Oberfläche auf, an der freiliegende Kanten der Zellwände herausragen. Das Faserpräparat zeichnet sich dadurch aus, dass mindestens 10% der Oberflächen der Faserpartikel im Faserpräparat entweder keine freiliegenden Kanten mehr aufweisen oder modifizierte Zellwände, die an ihren freiliegenden Kanten eine Wanddicke von > 5 µm aufweisen.

Bei dem erfindungsgemäßen Faserpräparat ist die Oberfläche der Fasern deutlich weniger porös, dünnwandig und weniger scharfkantig als in der nativen Struktur. Mindestens 10% der gesamten Oberflächen der Faserpartikel im Faserpräparat weisen entweder keine oder deutlich dickere Kanten der aus der Oberfläche herausragenden Zellwände auf. Die Kanten haben dabei eine Dicke von über 5 µm, besonders vorteilhaft über 10 µm. Hierbei wurde erkannt, dass sich durch die obige Oberflächenmodifikation Öl- und Fettbindeeigenschaften der Faserpartikel und somit des Faserpräparats verringern, wie weiter unten in Verbindung mit den Zeichnungen noch näher ausgeführt wird. Je größer der Anteil der in obiger Weise modifizierten Oberflächen der Faserpartikel im Faserpräparat ist, desto stärker werden die Fettbindeeigenschaften des Faserpräparats reduziert.

Die an der Oberfläche der Faserpartikel angeordneten Zellvolumina bzw. zur Oberfläche geöffneten Hohlräume haben dabei vorzugsweise zu einem Anteil von über 50%, besonders vorteilhaft von über 85%, aller an der Oberfläche zugänglichen Zellen ein Volumen kleiner des Volumens einer intakten nativen Kotyledonenzelle. Vorzugsweise ist das Volumen unter 20%, besonders bevorzugt unter 10 % des nativen Zellvolumens.

In einer Ausgestaltung der Erfindung sind zumindest die an die Oberfläche grenzenden Zellen deformiert, so dass ihre ursprüngliche Struktur optisch oder mittels Rasterelektronenmikroskopie nicht mehr klar erkennbar ist oder verzerrt vorliegt. Damit werden die Kapillarkräfte und Oberflächenkräfte abgeschwächt und die Öltröpfchen können sich an der Faseroberfläche nicht mehr so gut anlagern.

Durch die kompaktere Struktur und Oberfläche und aufgrund geringerer Hohlraumvolumina ist die Schüttdichte des erfindungsgemäßen Faserpräparates größer als 220 g/Liter, besonders vorteilhaft größer 300 g/Liter.

Die für die Erniedrigung der Fettbindeeigenschaften erforderliche Modifikation der Oberfläche bzw. Oberflächenstruktur der Faserpartikel kann überraschenderweise sehr einfach beispielsweise durch Variation der Temperatur bei der Trocknung erreicht werden. Dabei zeigt sich bei Einsatz von Temperaturen über 130 °C, dass die Zellwände anschließend dicker und kompakter erscheinen und die Kanten der Zellwände abgerundet und nicht mehr so scharfkantig sind. Dies zeigt sich beispielsweise unter dem Rasterelektronenmikroskop deutlich. Bei entsprechend hohen Temperaturen können die Zellwandkanten auch vollständig von der Oberfläche verschwinden. Es besteht auch die Möglichkeit, die Faserpartikel nicht zu trocknen, sondern zur Modifikation der Oberfläche bzw. Oberflächenstruktur lediglich entsprechend zu erhitzen. Die danach noch feuchte Faserfraktion kann in einigen Anwendungen dann direkt genutzt werden, z.B. als Zusatz für Lebensmittel, Futtermittel, Kosmetika oder Dünger.

In Folge der Wärmebehandlung wird das von den Zellwandstücken umschlossene Volumen kleiner und die Ölbindung der Faserpartikel reduziert. Bei Einsatz des Faserpräparates mit derart thermisch modifizierten Faserpartikeln aus Lupinenkotyledonen in fetthaltigen Rezepturen, besonders wenn sie einen reduzierten Fettgehalt aufweisen, verbessert sich der Genusswert deutlich. Überraschenderweise zeigen Lupinen-Faserpräparate mit thermisch modifizierter Oberfläche die Fähigkeit, besonders in fettreduzierten Lebensmitteln ein weicheres, cremigeres Mundgefühl entstehen zu lassen, als es bei nativen Lupinenfaserpräparaten bei gleicher Konzentration entsteht. Durch die Reduktion scharfkantiger Zellwandbestandteile gleitet das erfindungsgemäße Faserpräparat offensichtlich deutlich leichter über die Zunge, so dass ein weicheres Mundgefühl wahrgenommen wird. Somit kann durch das erfindungsgemäße Faserpräparat der Genusswert von Lebensmitteln gesteigert werden.

Bei dem vorgeschlagenen Verfahren zur Herstellung des Faserpräparates aus Lupinensamen werden die Lupinensamen zunächst geschält und nach der Schälung vorliegende Kotyledonen der Lupinensamen flockiert oder zerkleinert und danach entölt. Anschließend wird in einem wässrigen Prozess eine Faserfraktion von den Proteinen der Kotyledonen abgetrennt und die Faserfraktion erhitzt und/oder getrocknet. Vor, während oder nach dieser Trocknung bzw. während der Erhitzung wird die Faserfraktion thermisch so modifiziert, dass mindestens 10% der Oberflächen der Faserpartikel in der Faserfraktion keine freiliegenden Kanten mehr aufweisen oder modifizierte Zellwände, die an ihren freiliegenden Kanten eine Wanddicke von > 5 µm aufweisen. Die thermische Modifikation erfolgt durch Einstellung von Temperaturen von über 130 °C, bei der Erhitzung oder Trocknung, beispielsweise einer Gefriertrocknung. Die Wirkung dieser thermischen Modifikation ist vergleichbar einer Erhitzung eines wabenförmigen Wachsgefüges, bei dem das Gefüge zumindest an der Oberfläche seine ursprüngliche Geometrie (beim Wachs durch den Schmelzvorgang) verliert und gegebenenfalls neue Strukturen bildet.

Vorzugsweise werden die Kotyledonenfasern bei der Herstellung des erfindungsgemäßen Faserpräparates mechanisch zerkleinert, wobei über 50% der Partikel im Anschluss an die Zerkleinerung eine Partikelgröße von kleiner 250 µm aufweisen, besonders vorteilhaft kleiner 150 µm. Die Zerkleinerung kann im trockenen und im nassen Zustand erfolgen. Durch diese mechanische Behandlung kann zudem die Schüttdichte auf Werte über 250 g/Liter gesteigert werden. Die Zerkleinerung der Faserpräparate kann zusätzlich zu einem Abrunden und Abschleifen eines Teils der scharfen Zellwandkanten führen, wodurch bei Einsatz in Lebensmitteln ein nochmals glatteres, cremigeres Mundgefühl erzeugt wird.

Auch eine Behandlung mit Druck und/oder Scherung kann zur weiteren Reduktion der Porosität und zur Reduktion der Scharfkantigkeit der Zellwandkanten führen. Dies kann ebenfalls mit trockenen Fasern, beispielsweise mittels Walzen oder Pressen, oder in nasser Form mittels Walzen, Homogenisatoren oder Hochdruckreaktoren erfolgen. Bei Durchführung dieser Behandlung mit Druck und/oder Scherung bei den obigen Temperaturen kann der kompaktierende Effekt nochmals deutlich verstärkt werden.

Auch die chemische Zusammensetzung des Faserpräparates, die durch Variation der Behandlung erheblich verändert werden kann, hat einen großen Einfluss auf die Eigenschaften des Präparates. So zeigen Fasern, deren Proteingehalt unter 20 Mass-% liegt, ein angenehmeres Mundgefühl als Fasern mit einem Proteingehalt über 20 Mass-%. Somit ist es vorteilhaft, wenn das Präparat weniger als 20 Mass.-% Protein, besonders vorteilhaft weniger als 15 Mass-% Protein enthält. Dies kann dadurch erreicht werden, dass mindestens zwei wässrige Extraktionsschritte mit anschließender Zentrifugation mit den zerkleinerten Lupinenkotyledonen durchgeführt werden, bevor das Präparat getrocknet wird. Wenn verschiedene pH-Werte bei der Extraktion zum Einsatz kommen, ist es besonders vorteilhaft, insgesamt drei Extraktionsschritte durchzuführen, um den Proteingehalt zu reduzieren. In einigen Fällen sind vier Extraktionsschritte besonders effektiv, so dass hier der Proteingehalt auf unter 12 Mass-% abgesenkt werden kann. Zur Vermeidung von Konkurrenzreaktionen zwischen dem Samen-eigenen Öl in den Faserpräparaten und dem Öl in der Lebensmittelrezeptur, in der das Faserpräparat eingesetzt wird, sollte der Ölgehalt der Kotyledonenfasern zudem auf einen Wert kleiner 2 % (gemessen nach Büchi (Pendl et al., 1998 "Determination of total fat in foods and feeds by the caviezel method, based on a gas chromatographic technique" Journal of AOAC International, 81, 907-17) abgesenkt werden. Dies kann mittels Extraktion mit amphiphilen oder lipophilen Lösemitteln wie Hexan, Ethanol oder überkritischem CO₂ erreicht werden. Vorteilhaft wird dieser Schritt vor der Proteinextraktion durchgeführt werden.

Um eine gleichmäßigere Struktur der Faserpräparate zu erzielen, kann es sinnvoll sein, die Faserpräparate nicht aus Lupinenmehl sondern aus flockierten Kotyledonen herzustellen. Hierfür werden die Samen zunächst geschält und danach die geschälten Kerne zwischen Walzen zu Flocken zerquetscht. Danach kann die o.g. Zerkleinerung erfolgen.

Die Faserpartikel aus den Kotyledonen bilden vorzugsweise einen Anteil von ≥ 70% am getrockneten Faserpräparat. Besonders vorteilhaft enthält das Faserpräparat aus den Kotyledonenfasern bzw. Faserpartikeln auch einen Anteil an Lupinen-Samenschale. Dies hat den Vorteil, dass auf der einen Seite weitere Partikel mit glatter Oberfläche bereitgestellt werden, zum anderen wird der Anteil an Lignin im Präparat erhöht, was bei der Herstellung bioaktiver Lebensmittel erwünscht sein kann. Der Anteil an Lignin beträgt im erfindungsgemäßen Präparat vorteilhaft zwischen 0,02 und 2 Mass.-%. Ein Anteil an Schalen kann sich zudem positiv auf die Verarbeitung auswirken, da die Schalenpartikel aufgrund ihrer Form und Dichte bei der Dosierung leichter fließen als die Kotyledonenfasern.

Das vorgeschlagene Faserpräparat lässt sich in vielen Lebensmitteln einsetzen. Applikationsbeispiele sind:
- Brühwurstwaren (bis zu 3%)
- Vegane Wurstalternativen (bis zu 3%)
- Streichwurstprodukte (bis zu 5%)
- Feine Backwaren
Die Angaben in Klammern geben dabei den Anteil des Faserpräparates in Mass-% an dem jeweiligen Lebensmittel an.

Aufgrund der besonderen Struktur von Lupinus angustifolius eignet sich diese Lupinenspezies besonders gut als Roh- bzw. Ausgangsstoff für das erfindungsgemäße Faserpräparat.

### Kurze Beschreibung der Zeichnungen

Das vorgeschlagene Faserpräparat wird nachfolgend anhand der Zeichnungen nochmals näher erläutert. Hierbei zeigen:
- Fig. 1: eine Struktur eines Faserpräparates aus Lupinen-Kotyledonen nach Gefriertrocknung im Vakuum bei Temperaturen unter 80 °C gemäß dem Stand der Technik;
- Fig. 2: ein Beispeil für eine Struktur eines erfindungsgemäßen Faserpräparates aus Lupinen-Kotyledonen von Lupinus angustifolius, wie es nach Kontakttrocknung im Ofen bei einer Temperatur von über 130°C erhalten wird; und

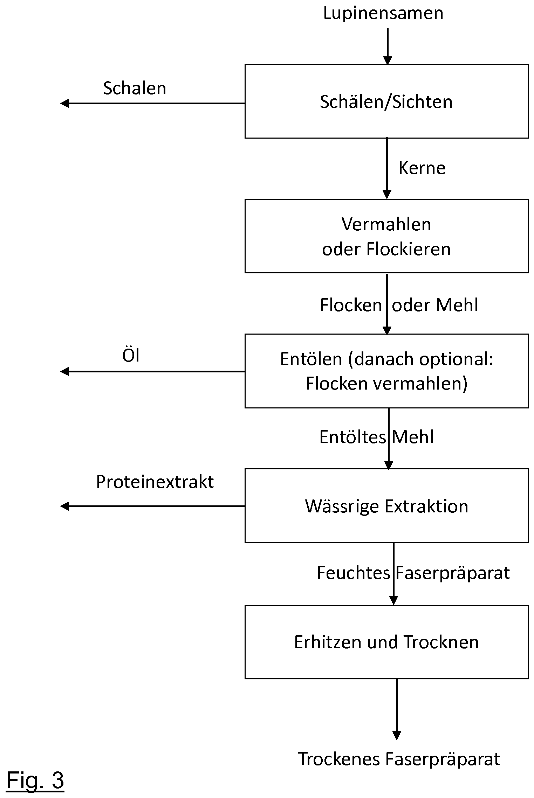

- Fig. 3: ein beispielhaftes Ablaufschema zur Herstellung des erfindungsgemäßen Faserpräparates.

### Wege zur Ausführung der Erfindung

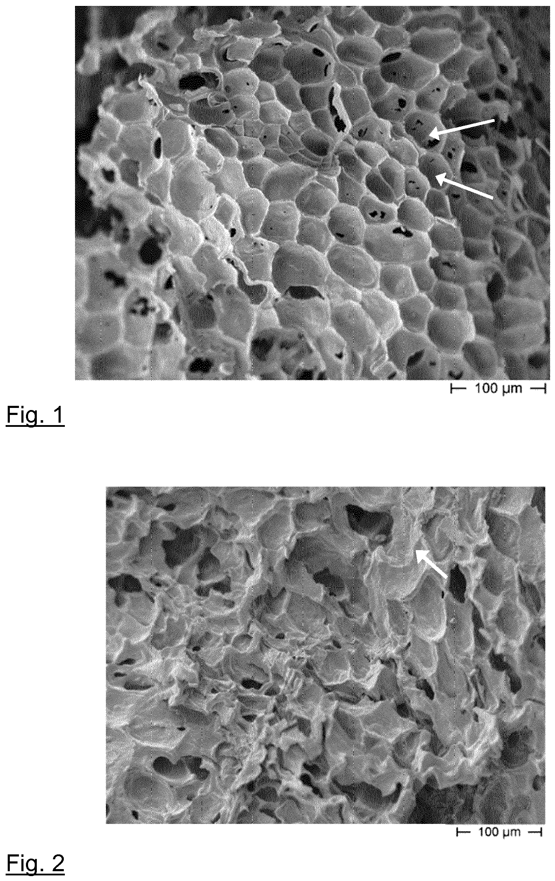

Figur 1 zeigt eine rasterelektronenmikroskopische Aufnahme der Struktur eines Faserpräparates des Standes der Technik aus Lupinen-Kotyledonen von Lupinus angustifolius nach Gefriertrocknung im Vakuum bei Temperaturen unter 80 °C. Die Fasern weisen dabei einen hohen Anteil an Waben-förmigen Hohlräumen in der Faserstruktur auf. Die Figur zeigt, dass sich bei derart behandelten Fasern eine feinporige Oberfläche ausbildet, die aus einzelnen Segmenten der Zellwände aufgebaut ist. Dadurch sind in der Oberfläche kleine Volumenelemente integriert, die aus einem Teil des Volumens der Kotyledonenzellen bestehen. Wenn die native Struktur der Zellen nach einer schonenden Trocknung gut erhalten ist, umschließen die freiliegenden Kanten der Zellwände, die aus der Oberfläche der Faserpartikel des Faserpräparates herausragen, relativ große Volumina, die zum Teil noch bis zu 50% des ursprünglichen Volumens der jeweiligen Zelle betragen können (Pfeile in Fig. 1). Zudem sind die Bruchkanten der Zellwände mit weniger als 5 µm sehr dünn und scharfkantig. Diese poröse Oberflächenstruktur mit den scharfen Bruchkanten hat zur Folge, dass in einer derartigen Oberfläche Öl besonders stabil angelagert werden kann und das Faserpräparat somit über hervorragende Öl- und Fettbindeeigenschaften verfügt. Aufgrund der feinporigen Struktur des gefriergetrockneten Faserpräparates weist es zudem eine Schüttdichte von etwa 130 g/Liter auf.

Demgegenüber zeigt Figur 2 eine rasterelektronenmikroskopische Aufnahme der Struktur eines erfindungsgemäßen Faserpräparates. In diesem Beispiel sind die an die Oberfläche grenzenden Zellen stark deformiert, so dass ihre ursprüngliche Struktur nicht mehr klar erkennbar ist oder verzerrt vorliegt. Die Zellwände sind dicker und kompakter, die Kanten der Zellwände (vgl. Pfeil in Fig. 2) dicker und nicht mehr so scharfkantig wie bei dem Präparat des Standes der Technik. Die Oberfläche der Fasern ist deutlich weniger porös, weniger dünnwandig und weniger scharfkantig als in der nativen Struktur. Das von den Zellwandstücken umschlossene Volumen ist kleiner als in der nativen Struktur. Damit werden die Kapillarkräfte und Oberflächenkräfte abgeschwächt und die Öltröpfchen können sich an der Faseroberfläche nicht mehr so gut anlagern.

Ein Faserpräparat mit der obigen Struktur kann beispielsweise mit den folgenden Schritten erhalten werden. In einer beispielhaften Ausgestaltung des Herstellungsverfahrens werden Lupinensamen in einem ersten Schritt mit Hilfe eines Schälaggregates und einer Sichtung weitestgehend von den Samenschalen bereit. Die geschälten Kerne werden anschließend flockiert oder fein vermahlen und mittels Lösemittel, z.B. überkritischem CO2, entölt. Es ist auch möglich, die Flocken nach dem Entölen zu vermahlen. Danach werden die vermahlenen, entölten Lupinensamen einem oder mehreren wässrigen Extraktionsprozessen unterworfen, so dass neben einer Proteinextraktfraktion nach einer zentrifugalen Trennung auch ein feuchter faserhaltiger Rückstand verbleibt. Dieser Rückstand wird nun durch Kontakt mit Luft oder einer festen Substanz (z.B. Metall), die eine Temperatur von über 120°C aufweist, für mindestens 30 Sekunden getrocknet. Die Faserstruktur wird im Sinne der Erfindung besser, wenn der Erwärmungsvorgang länger als 1 Minute dauert. Es zeigt sich, dass der dabei erhaltene getrocknete Rückstand einen hohen Anteil der erfindungsgemäßen deformierten Zellen enthält.

## Patentansprüche

1. Faserpräparat aus Lupinensamen, in dem Faserpartikel aus Kotyledonen der Lupinensamen enthalten sind, die im Ausgangsmaterial eine zellenartige Struktur mit durch Zellwände voneinander abgegrenzten Hohlräumen und eine Oberfläche aufweisen, an der freiliegende Kanten der Zellwände herausragen,
**dadurch gekennzeichnet,**
**dass** mindestens 10% der Oberflächen der Faserpartikel im Faserpräparat keine freiliegenden Kanten mehr aufweisen oder modifizierte Zellwände, die an ihren freiliegenden Kanten eine Wanddicke von > 5 µm aufweisen.

2. Faserpräparat nach Anspruch 1,
**dadurch gekennzeichnet,**
**dass** die mindestens 10% der Oberflächen der Faserpartikel im Faserpräparat zur Oberfläche geöffnete Hohlräume aufweisen, die zu einem Anteil von > 50% ein gegenüber zur Oberfläche geöffneter Hohlräume unbehandelter Kotyledonenfasern reduziertes Volumen aufweisen.

3. Faserpräparat nach Anspruch 1 oder 2,
**dadurch gekennzeichnet,**
**dass** die Faserpartikel aus den Kotyledonen einen Anteil von ≥ 70% am getrockneten Faserpräparat bilden.

4. Faserpräparat nach einem der Ansprüche 1 bis 3,
**dadurch gekennzeichnet,**
**dass** das Faserpräparat eine partikuläre Konsistenz mit einer Schüttdichte aufweist, die > 220 g/Liter beträgt.

5. Faserpräparat nach einem der Ansprüche 1 bis 4,
**dadurch gekennzeichnet,**
**dass** die modifizierten Zellwände an ihren freiliegenden Kanten eine Wanddicke von > 10 µm aufweisen.

6. Faserpräparat nach einem der Ansprüche 1 bis 5,
**dadurch gekennzeichnet,**
**dass** die mindestens 10% der Oberflächen der Faserpartikel im Faserpräparat zur Oberfläche geöffnete Hohlräume aufweisen, die zu einem Anteil von > 50% ein Volumen aufweisen, das < 20% eines mittleren Volumens geschlossener Hohlräume unbehandelter Kotyledonenfasern beträgt.

7. Faserpräparat nach einem der Ansprüche 1 bis 6,
**dadurch gekennzeichnet,**
**dass** die Faserpartikel aus den Kotyledonen einen Proteingehalt von < 20 Mass-% aufweisen.

8. Faserpräparat nach einem der Ansprüche 1 bis 7,
**dadurch gekennzeichnet,**
**dass** die Faserpartikel aus den Kotyledonen einen Ölgehalt von 2 Mass-% aufweisen.

9. Faserpräparat nach einem der Ansprüche 1 bis 8,
**dadurch gekennzeichnet,**
**dass** das Faserpräparat auch einen Faseranteil aus Schalen der Lupinensamen enthält.

10. Verfahren zur Herstellung eines Faserpräparates aus Lupinensamen,
bei dem die Lupinensamen geschält und nach der Schälung vorliegende Kotyledonen der Lupinensamen flockiert oder zerkleinert und danach entölt werden, anschließend in einem wässrigen Prozess eine Faserfraktion von Proteinen der Kotyledonen abgetrennt und die Faserfraktion erhitzt und/oder getrocknet wird, wobei die Faserfraktion aus Faserpartikeln besteht, die eine zellenartige Struktur mit durch Zellwände voneinander abgegrenzten Hohlräumen und eine Oberfläche aufweisen, an der freiliegende Kanten der Zellwände herausragen, wobei die Faserfraktion thermisch so modifiziert wird, dass mindestens 10% der Oberflächen der Faserpartikel in der Faserfraktion keine freiliegenden Kanten mehr aufweisen oder modifizierte Zellwände, die an ihren freiliegenden Kanten eine Wanddicke von 5 µm aufweisen,
**dadurch gekennzeichnet,**
**dass** die Faserfraktion bei der Erhitzung oder Trocknung Temperaturen von > 130°C ausgesetzt wird, um die Eliminierung der freiliegenden Kanten oder die Modifikation der Zellwände zu erreichen.

11. Verfahren nach Anspruch 11,
**dadurch gekennzeichnet,**
**dass** die Faserfraktion mechanisch auf Partikelgrößen der Faserpartikel von < 250 µm zerkleinert wird.

12. Verfahren nach Anspruch 10 oder 11,
**dadurch gekennzeichnet,**
**dass** vor der Erhitzung oder Trocknung eine Behandlung der Faserfraktion mittels Walze, Homogenisator oder Hochdruckreaktor erfolgt.

13. Lebensmittelprodukt, insbesondere Brühwurstware, vegane Wurstalternative, Streichwurstprodukt oder feine Backware, das das Faserpräparat nach einem oder mehreren der Patentansprüche 1 bis 9 enthält.

## Claims

1. Fiber preparation of lupine seeds containing fiber particles from cotyledons of said lupine seeds, which comprise in the starting material a cell-like structure with cavities which are delimited against each other by cell walls, and comprise a surface from which exposed edges of the cell walls protrude,
**characterized in**
**that** at least 10% of the surfaces of the fiber particles in the fiber preparation do no longer comprise exposed edges or modified cell walls which comprise at their exposed edges a wall thickness of > 5 µm.

2. Fiber preparation of claim 1,
**characterized in**
**that** said at least 10 % of the surfaces of the fiber particles in the fiber preparation comprise cavities which are opened towards the surface, which comprise by an amount of > 50% a volume which is reduced in relation to the surface of opened cavities of untreated cotyledon fibers.

3. Fiber preparation of claim 1 or 2,
**characterized in**
**that** the fiber particles from the cotyledons make up an amount of ≥ 70 % of the dried fiber preparation.

4. Fiber preparation of any of the claims 1 to 3,
**characterized in**
**that** the fiber preparation comprises a particulate consistency with a bulk density which is > 220 g/l.

5. Fiber preparation of any of the claims 1 to 4,
**characterized in**
**that** the modified cell walls comprise a wall thickness at their exposed edges of > 10 µm.

6. Fiber preparation of any of the claims 1 to 5,
**characterized in**
**that** at least 10 % of the surfaces of the fiber particles in the fiber preparation comprise cavities which are opened towards the surface, which comprise by an amount of > 50 % a volume which is < 20 % of a mean volume of closed cavities of untreated cotyledon fibers.

7. Fiber preparation of any of the claims 1 to 6,
**characterized in**
**that** the fiber particles from the cotyledons comprise a protein content of < 20 % by mass.

8. Fiber preparation of any of the claims 1 to 7,
**characterized in**
**that** the fiber particles from the cotyledons comprise an oil content of < 2 % by mass.

9. Fiber preparation of any of the claims 1 to 8,
**characterized in**
**that** the fiber preparation also contains an amount of fibers from shells of said lupine seeds.

10. Method for the production of a fiber preparation of lupine seeds,
wherein lupine seeds are peeled and after the peeling the obtained cotyledons of the lupine seeds are flaked or crushed and then de-oiled, subsequently a fiber fraction is separated from proteins of the cotyledons in an aqueous process, and the fiber fraction is heated and/or dried,
wherein the fiber fraction consists of fiber particles which comprise a cell-like structure with cavities which are delimited against each other by cell walls, and which comprise a surface from which exposed edges of the cell walls protrude, wherein the fiber fraction is thermally modified in such a manner that at least 10% of the surfaces of the fiber particles in the fiber fraction do no longer comprise exposed edges or modified cell walls which comprise at their exposed edges a wall thickness of > 5 µm,
**characterized in**
**that** the fiber fraction in the heating or drying is exposed to temperatures of
> 130°C to achieve the elimination of the exposed edges or the modification of the cell walls.

11. Method of claim 11,
**characterized in**
**that** the fiber fraction is mechanically crushed to particle sizes of the fiber particles of < 250 µm.

12. Method of claim 10 or 11,
**characterized in**
**that** prior to the heating or drying a treatment of the fiber fraction by means of a roller, homogenizer or high-pressure reactor is carried out.

13. Food product, in particular boiled sausages, vegan sausage alternative, sausage spread product or fine pastries, which contains the fiber preparation of one or more of the claims 1 to 9.

## Revendications

1. Préparation de fibres de graines de lupins, dans laquelle des particules de fibres de cotylédons des graines de lupins sont contenues, qui présentent dans le matériau de départ, une structure de type cellulaire avec des cavités délimitées les unes des autres par des parois cellulaires et une surface au niveau de laquelle des bords exposés des parois cellulaires dépassent,
**caractérisée en ce que**
au moins 10 % des surfaces des particules de fibres dans la préparation de fibres ne présentent plus de bords exposés ou des parois cellulaires modifiées qui présentent au niveau de leurs bords exposés, une épaisseur de paroi > 5 µm.

2. Préparation de fibres selon la revendication 1,
**caractérisée en ce que**
les au moins 10 % des surfaces des particules de fibres dans la préparation de fibres présentent des cavités ouvertes vers la surface, qui présentent en une proportion > 50 %, un volume réduit de fibres de cotylédons non traitées par rapport aux cavités ouvertes vers la surface.

3. Préparation de fibres selon la revendication 1 ou 2,
**caractérisée en ce que**,
les particules de fibres des cotylédons forment une proportion de ≥ 70 % de préparation de fibres sèche.

4. Préparation de fibres selon l'une des revendications 1 à 3,
**caractérisée en ce que**
la préparation de fibres présente une consistance particulaire avec une densité apparente qui est > 220 g/litre.

5. Préparation selon l'une des revendications 1 à 4,
**caractérisée en ce que**,
les parois cellulaires modifiées présentent au niveau de leurs bords exposés, une épaisseur de paroi de > 10 µm.

6. Préparation de fibres selon l'une des revendications 1 à 5,
**caractérisée en ce que**
les au moins 10 % des surfaces des particules de fibres dans la préparation de fibres présentent des cavités ouvertes vers la surface qui présentent un volume en une proportion > 50 %, qui est de < 20 % d'un volume moyen de cavités ouvertes de fibres de cotylédons non traitées.

7. Préparation de fibres selon l'une des revendications 1 à 6,
**caractérisée en ce que**
les particules de fibres des cotylédons présentent une teneur en protéine de < 20 % en masse.

8. Préparation de fibres selon l'une des revendications 1 à 7,
**caractérisée en ce que**
les particules de fibres des cotylédons présentent une teneur en huile de < 2 % en masse.

9. Préparation de fibres selon l'une des revendications 1 à 8,
**caractérisée en ce que**
la préparation de fibres contient également une teneur en fibres des téguments des graines de lupins.

10. Procédé de fabrication d'une préparation de fibres de graines de lupins, où les graines de lupins sont décortiquées et après le décorticage, des cotylédons présents des graines de lupins sont réduits en flocons ou broyés et ensuite déshuilés, puis dans un processus en phase aqueuse, une fraction de fibres est séparée des protéines des cotylédons et la fraction de fibres est chauffée et/ou séchée,
dans lequel la fraction de fibres est constituée de particules de fibres qui présentent une structure de type cellulaire avec des cavités séparées les unes des autres par des parois cellulaires et une surface au niveau de laquelle des bords exposés de la paroi cellulaire dépassent, dans lequel la fraction de fibres est modifiée thermiquement de telle sorte qu'au moins 10 % des surfaces des particules de fibres dans la fraction de fibres ne présentent plus de bords exposés ou des parois cellulaires modifiées qui présentent au niveau de leurs bords exposés, une épaisseur de paroir 5 µm,
**caractérisé en ce que**
la fraction de fibres est exposée lors du chauffage ou du séchage, à des températures de > 130 °C pour parvenir à l'élimination des bords exposés ou à la modification des parois cellulaires.

11. Procédé selon la revendication 11,
**caractérisé en ce que**
la fraction de fibres est broyée mécaniquement à des tailles de particules des particules de fibres de < 250 µm.

12. Procédé selon la revendication 10 ou 11,
**caractérisé en ce que**,
avant le chauffage ou le séchage, un traitement de la fraction de fibres s'effectue au moyen d'un rouleau, d'un homogénéisateur ou d'un réacteur à haute pression.

13. Produit alimentaire, en particulier saucisses à cuire, substituts végans de saucisses, produits de type saucisse à tartiner ou pâtisseries fines, qui contient la préparation de fibres selon l'une ou plusieurs des revendications 1 à 9.
